# EUROPEAN PATENT APPLICATION

(11) **EP 4 668 461 A1**
(43) Date of publication of application: **24.12.2025**
(21) Application number: 24865680.3
(22) Date of filing: 31.07.2024
(51) Int. Cl.: H01M 50/502, H01M 10/052

(54) **ELECTRODE TAB SUPPORT**

(30) Priority: 13.09.2023 KR 20230121661
(71) Applicant: LG Energy Solution, Ltd., Seoul 07335 (KR)
(72) Inventor: KIM, Yeeun, Daejeon 34122 (KR); CHOI, Seong Won, Daejeon 34122 (KR); KIM, Ji Young, Daejeon 34122 (KR); LEE, Daejin, Daejeon 34122 (KR)
(74) Representative: Goddar, Heinz J.
(86) International application number: PCT/KR2024/011232
(87) International publication number: WO 2025/058237

(57) **Abstract**

The present invention relates to an electrode tab support. More specifically, it relates to an electrode tab support including a first electrode tab receptacle and a second electrode tab receptacle.

## Description

### [Technical Field]

This application claims the benefit of priority to Korean Patent Application No. 10-2023-0121661, filed September 13, 2023, the disclosures of which are incorporated herein by reference in their entirety.

The present invention relates to an electrode tab support. More specifically, it relates to an electrode tab support including a first electrode tab receptacle and a second electrode tab receptacle.

### [Related Art]

As the technology development and the demand for mobile devices increase, rechargeable secondary batteries are being used extensively as an energy source for a variety of mobile devices. Secondary batteries are also gaining attention as an energy source for electric and hybrid vehicles, which are being proposed as a way to solve air pollution from conventional gasoline and diesel vehicles.

Secondary batteries are categorized into coin-type batteries, cylindrical-type batteries, angular-type batteries, and pouch-type batteries based on the shape of the battery case. Among them, pouch-type batteries are attracting a lot of attention because they use a pouch exterior material consisting of a metal layer (foil) and a multilayer film of synthetic resin coated on the upper and lower surfaces of the metal layer to form the exterior, which can significantly reduce the weight of the battery compared to cylindrical or angular-type batteries using a metal can, making it possible to reduce the weight of the battery, and they have the advantage of being able to change into various shapes.

Pouch-type batteries are typically manufactured by a process that activates the battery cell after the battery assembly process. The activation process typically involves pressurizing the battery cell with a jig and applying a current to the battery cell to charge and discharge it to a predetermined voltage.

In the manufacture of pouch-type batteries, it is important that the battery cells are pressurized uniformly during the battery assembly process. In particular, during the warm isostatic pressure (WIP) process in the manufacture of all-solid-state batteries, the tab portion of the electrode current collector is subjected to the same pressure as the electrode. In this case, the tab of the current collector protrude to the outside of the electrode, and when the cell is stacked, the tabs are separated from each other by the thickness of the electrode, causing uneven pressure to be applied to the electrode area in contact with the tabs, resulting in unevenness and cracking of the electrode, which reduces cell life performance and affects cell stacking.

Therefore, it is necessary to develop an electrode tab support to prevent electrode cracking and form a uniform electrode to realize excellent performance of all-solid-state batteries.

### [Prior Art Reference]

### [Patent Reference]

(Patent Reference 1) Korean Patent Laid-open Publication No. 10-2015-0106026

### [Detailed Description of the Invention]

### [Technical Problem]

One of the objects of the present invention is to provide an electrode tab support capable of preventing cracking of electrodes and producing electrodes of uniform thickness and size in a process that applies high pressure in the manufacture of all-solid-state batteries.

Another object of the present invention is to provide an electrode tab support capable of preventing degradation of the performance and lifetime of a battery cell.

Another object of the present invention is to provide an electrode tab support that facilitates stacking of battery cells.

### [Technical Solution]

One example of the present invention provides an electrode tab support comprising: a body portion; and tab receptacles formed on the body portion and configured to receive electrode tabs, wherein the tab receptacles comprise a first tab receptacle and a second tab receptacle, wherein the first tab receptacle is disposed on a first side of the body portion, and the second tab receptacle is disposed on a second side of the body portion, wherein the first tab receptacle and the second tab receptacle are spaced apart from each other at a predetermined distance in the thickness direction of the body portion, and staggered from each other and not in line with each other in the length direction of the body portion.

In another example of the present invention, it provides an electrode tab support, wherein the first tab receptacle and the second tab receptacle are spaced apart in the thickness direction of the body portion, and they are disposed alternately with each other.

In another example of the present invention, it provides an electrode tab support, wherein the first tab receptacle and the second tab receptacle are spaced apart from a third side of the body portion in the thickness direction of the body portion.

In another example of the present invention, it provides an electrode tab support, wherein the distance (d) spaced apart in the thickness direction of the body portion of the first tab receptacle and the second tab receptacle is the same as the laminated thickness of the electrode and electrolyte layer.

In another example of the present invention, it provides an electrode tab support, wherein the first tab receptacle receives a first electrode tab, and the second tab receptacle receives a second electrode tab.

In another example of the present invention, it provides an electrode tab support, wherein the tab receptacle provides having three sides abutting the body portion.

In another example of the present invention, it provides an electrode tab support, wherein the width (W) of the tab receptacle is equal to the thickness of the electrode tab.

In another example of the present invention, it provides an electrode tab support, wherein the length (L) of the tab receptacle is equal to the width of the electrode tab.

In another example of the present invention, it provides an electrode tab support, wherein the height of the tab receptacle is equal to the height (H_{b}) of the body portion.

In another example of the present invention, it provides an electrode tab support, wherein the first tab receptacle may comprise a plurality of first tab receptacles, and the plurality of first tab receptacles may be further included as many as the number (n) of the first electrodes.

In another example of the present invention, it provides an electrode tab support, wherein the second tab receptacle may comprise a plurality of second tab receptacles, and the plurality of second tab receptacles may be further included as many as the number (m) of the second electrodes.

In another example of the present invention, it provides an electrode tab support, wherein the first and second sides of the body portion are sides facing each other in the same direction as the thickness direction of the body portion.

In another example of the present invention, it provides an electrode tab support, wherein the height (H_{b}) of the body portion is less than or equal to the height (Ht) of the electrode tab.

Another example of the present invention provides an electrode tab support, wherein 50% of compression force deflection (CFD) of the body portion is 3000 kPa to 4000 kPa.

In another example of the present invention, the electrode tab support is for an all-solid-state battery.

### [Advantageous Effects]

The present invention may provide an electrode tab support that prevents electrode cracking and produces electrodes of uniform thickness and size in a process that applies high pressure in the manufacture of all-solid-state batteries.

The present invention may provide an electrode tab support that prevents degradation of the performance and lifetime of a battery cell.

The present invention may provide an electrode tab support that facilitates stacking of battery cells.

### [Brief Description of Drawing]

FIG. 1 is a perspective view of an electrode tab support according to one example of the present invention.
FIG. 2 is an isolated perspective view illustrating the use of an electrode tab support in accordance with one example of the present invention.
FIG. 3 is a diagram illustrating the use of an electrode tab support according to one example of the present invention.
FIG. 4 is a perspective view of an electrode tab support according to one example of the present invention.
FIG. 5 is a perspective view of an electrode tab support according to one example of the present invention.
FIG. 6 is a perspective view of an electrode tab support according to one example of the present invention.

### [Best Mode]

Examples of the present invention will now be described in detail with reference to the accompanying drawings. The drawings may exaggerate all or part of the configuration for illustrative purposes only.

It will also be apparent to those skilled in the art that the invention is not limited to what is shown in the accompanying drawings or described herein, and that the invention may be implemented in various forms without departing from the technical ideas of the invention.

In the process of manufacturing all-solid-state batteries, interfacial adhesion of electrodes is important to improve battery performance such as ionic conductivity, and a process of applying the electrode laminate at high pressure is required to achieve interfacial adhesion of the electrodes. This means that during the manufacturing of all-solid-state batteries, the electrode laminate must be uniformly pressurized during the warm isostatic pressure (WIP) process to facilitate the migration of lithium ions.

However, in the above isostatic pressure process, not only the electrode but also the tab portion of the electrode current collector is subjected to the same pressure, which causes the edge of the electrode where the electrode tab meets to be crushed, resulting in a thinner thickness than the portion having no tab, stretching the electrode, and causing the electrode to crack. The above issues occur not only in mono-cells, where the positive electrode and negative electrode are manufactured by stacking one sheet on top of the other, but also in bi-cells with double-sided positive electrodes or double-sided negative electrodes, and have a greater impact the higher the stack, such as the bi-cells. This can lead to poor performance and lifetime of the battery cells.

To solve these problems, the inventors of the present invention have developed an electrode tab support that allows the electrode and electrode tab to remain flat during the pressurization process, preventing uneven formation of the electrode and preventing cracking of the electrode.

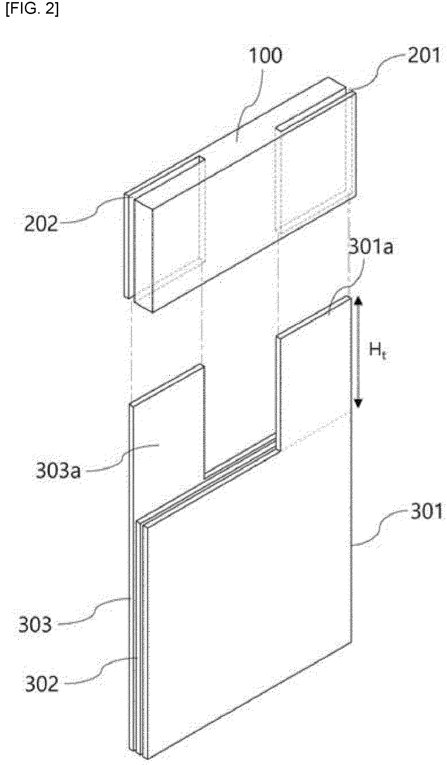

Prior to the specific description of the electrode tab support according to one example of the present invention, the configuration of a battery cell laminate received through the electrode tab support will first be briefly described below, with reference to FIG. 2.

FIG. 2 is an isolated perspective view illustrating the use of an electrode tab support in accordance with one example of the present invention.

Referring to FIG. 2, a battery cell laminate may include sequentially stacked first electrode (301), electrolyte layer (302), and second electrode (303). Here, the first electrode (301) may be a positive electrode or a negative electrode. The second electrode (303) may be a negative electrode or a positive electrode. The first electrode and the second electrode may be different electrodes.

The electrolyte layer (302) is disposed between the first electrode (301) and the second electrode (303), and may have a size equal to the size of the first electrode (301) and the second electrode (303), or may have a larger area compared to the first electrode (301) and the second electrode (303). Here, the electrolyte layer (302) may be a solid electrolyte, but is not limited thereto.

Additionally, electrode tabs associated with the electrodes of the battery cell laminate may be disposed. Here, the electrode tabs may include a first electrode tab (301a) protruding from the top of the first electrode (301) and a second electrode tab (303a) protruding from the top of the second electrode (303). In this case, the first electrode tab (301a) and the second electrode tab (303a) are spaced apart from each other and may be disposed at both ends of the battery cell laminate.

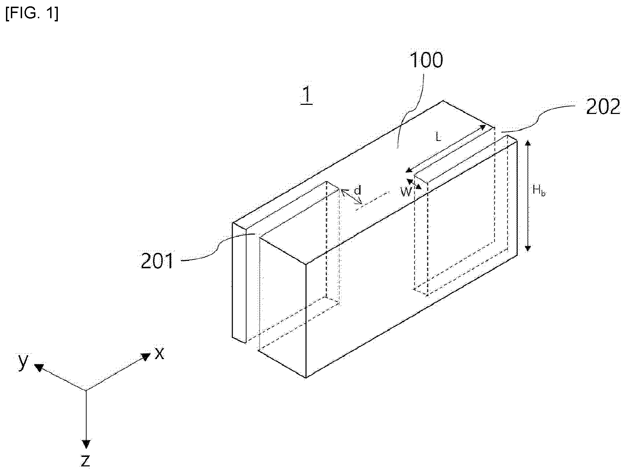

In the battery cell laminate, the first electrode tab (301a) and the second electrode tab (303a) may each be received in tab receptacles of the electrode tab support. Referring to FIG. 1 below, this will be described in more detail.

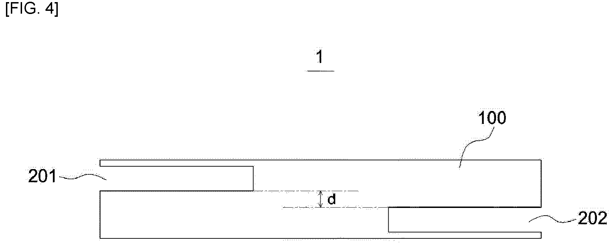

FIG. 1 is a diagram illustrating a perspective view of an electrode tab support according to one example of the present invention, and FIG. 4 is a diagram illustrating a top view of an electrode tab support according to one example of the present invention.

Referring to FIGs. 1 and 4, an electrode tab support according to one example of the present invention includes a body portion (100); and tab receptacles (200) formed in the body portion and configured to receive electrode tabs, wherein the tab receptacles include a first tab receptacle (201) and a second tab receptacle (202), wherein the first tab receptacle (201) is disposed on a first side of the body portion, and the second tab receptacle (202) is disposed on a second side of the body portion, wherein the first tab receptacle (201) and the second tab receptacle (202) may be spaced apart at a predetermined distance in the thickness direction of the body portion, and staggered from each other and not in line with each other in the length direction of the body portion.

According to one example, the electrode tab support (1) may include tab receptacles (201, 202) that receive electrode tabs. The tab receptacles (201, 202) may be integrally formed with the body portion (100).

The tab receptacle may include a first tab receptacle (201) and a second tab receptacle (202).

The first tab receptacle (201) and the second tab receptacle (202) may be spaced apart in the thickness direction of the body portion, and may be arranged alternately with each other.

The first tab receptacle (201) and second tab receptacle (202) may be spaced apart from a third side of the body portion in the thickness direction of the body portion. Here, the third side of the body portion may be a side that is horizontal to the longitudinal direction of the body portion. Referring to FIG. 1, the third side of the body portion may be a side in the x-axis direction.

The distance (d) spaced apart in the thickness direction of the body portion of the first tab receptacle and the second tab receptacle is the same as the laminated thickness of the electrode and electrolyte layer.

The first tab receptacle (201) may be disposed on a first side of the body portion (100), and the second tab receptacle (202) may be disposed on a second side of the body portion (100).

The first side of the body portion may be a side that is horizontal to the thickness direction of the body portion. Referring to FIG. 1, the first side of the body portion may be a side in the y-axis direction.

The second side of the body portion may be a side that is horizontal to the thickness direction of the body portion. Referring to FIG. 1, the second side of the body portion may be a first side in the y-axis direction and a different side from the first side.

The first side and the second side may be sides facing each other in the same direction as the thickness direction of the body portion.

Referring to FIG. 1, the thickness direction of the body portion refers to the y-axis direction, and the length direction of the body portion refers to the x-axis direction.

50% of compression force deflection (CFD) of the body portion may be 3000 kPa to 4000 kPa. CFD refers to compression force deflection, which is a measure of the force required to compress the body portion at a certain strain (e.g., 50%). The CFD can be measured by applying a compression load of 4 kPa at either 8 mm/min or 50 mm/min to a single layer of sample with 10 mm across and 10 mm long according to the method of ASTM D3574 test C. In this case, 50% of the CFD of the body portion may be 3000 kPa or more, 3100 kPa or more, 3200 kPa or more, 3300 kPa or more, 3400 kPa or more, 3500 kPa or more, 4000 kPa or less, 3900 kPa or less, 3800 kPa or less, 3700 kPa or less, 3600 kPa or less.

The first tab receptacle (201) and second tab receptacle (202) may be staggered from each other by a predetermined distance (d), rather than in line with each other in the length direction of the body portion (100). The reason why the first tab receptacle and the second tab receptacle are staggered from each other is that in a battery cell laminate in which the first electrode (301), the electrolyte layer (302), and the second electrode (303) are laminated in order, the first electrode (301) and the second electrode (303) are not aligned on the same line because they overlap. For example, in a battery cell laminate stacked in the order of a first electrode, an electrolyte layer, and a second electrode, the first and second tab receptacles may be staggered from each other by a predetermined distance (d) since the first and second tab receptacles are spaced apart by a thickness of one or more first electrodes, one or more second electrodes, and/or one or more electrolyte layers.

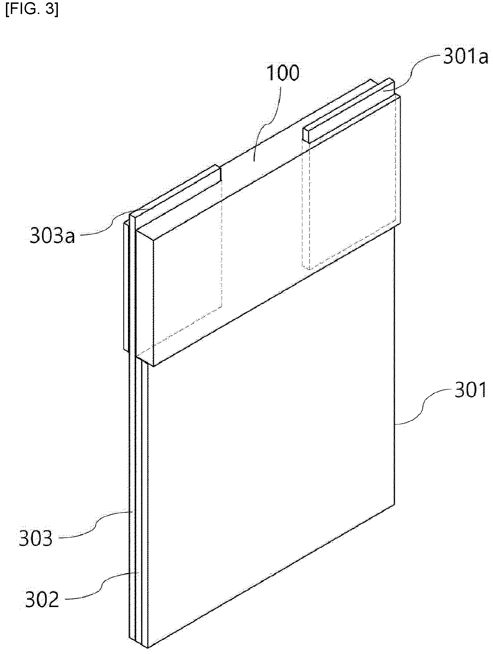

FIG. 3 is a diagram illustrating the use of an electrode tab support according to one example of the present invention.

Referring to FIG. 3, the first tab receptacle (201) may receive a first electrode tab (301a), and the second tab receptacle (202) may receive a second electrode tab (303a). The first electrode may be a positive electrode or a negative electrode, and the second electrode may be a negative electrode or a positive electrode. The first electrode and the second electrode may be different electrodes. However, the use of the electrode tab support is not limited to that illustrated in FIG. 3.

An electrode tab support according to one example of the present invention may have a plurality of electrode tabs, depending on the orientation of the electrode tabs. For example, although not shown, as in FIG. 2, where the orientation of the first electrode tab and the orientation of the second electrode tab are not in the same direction, the orientation of the first electrode tab and the orientation of the second electrode tab are opposite or in different directions, the first tab receptacle of the first electrode tab support may receive the first electrode tab, and the second receptacle of the second electrode tab support may receive the second electrode tab. Here, the first electrode tab support and the second electrode tab support may be different electrode tab supports. Thus, a plurality of electrode tab supports according to the present invention may be applied depending on the orientation of the electrode tabs.

The tab receptacle may have three sides abutting the body portion. The tab receptacle may be a recessed structure in the body portion. The shape of the groove is not particularly restricted, and can be any shape that can contain the shape of the electrode tabs.

The width (W) of the tab receptacle may be equal to the thickness of the electrode tab. The electrode tab may be a single electrode tab or two or more electrode tabs welded together. Welding means joining two or more electrode tabs together.

The length (L) of the tab receptacle may be equal to the width of the electrode tab.

The height (not shown in the drawing) of the tab receptacle may be the same as the height (H_{b}) of the body portion. Here, the height (H_{b}) of the body portion may be less than or equal to the height (Ht) of the electrode tab.

The first tab receptacle may include a plurality of first tab receptacles. The plurality of first tab receptacles may be further included as many as the number (n) of the first electrodes.

The second tab receptacle may include a plurality of second tab receptacles. The plurality of second tab receptacles may be further included as many as the number (m) of the second electrodes.

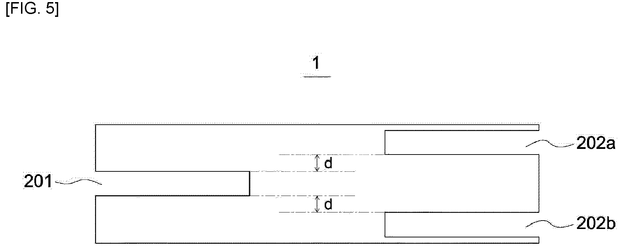

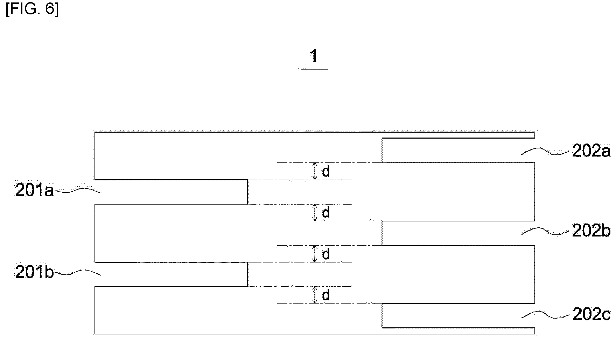

FIGs. 5 and 6 are drawings illustrating a top view of an electrode tab support according to one example of the present invention.

Referring to FIG. 5, an electrode tab support (1) according to one example of the present invention may include one first tab receptacle (201) and two second tab receptacles (202a, 202b).

Referring to FIG. 6, the electrode tab support (1) according to one example of the present invention may include two first tab receptacles (201a, 201b) and three second tab receptacles (202a, 202b, 202c).

An electrode tab support (1) according to one example of the present invention may comprise n first tab receptacles (not shown in the drawing). n is the number of first electrodes, which is an integer between 1 and 100.

An electrode tab support according to one example of the present invention may comprise m second tab receptacles (not shown in the drawing). m is the number of first electrodes, which is an integer between 1 and 100.

The electrode tab support may be used in the manufacture of all-solid-state batteries, but is not limited thereto, and may also be used in battery manufacturing processes involving pressurization.

While examples of the present invention have been described above, it is not intended to limit the present invention to the above described examples. Those skilled in the art will be able to practice examples of the present invention with suitable modifications, including omitting, changing, substituting, or adding other configurations of all or some of the components of the present invention, with reference to this specification and the accompanying drawings, without departing from the technical ideas of the present invention.

The terms and expressions used herein are to be interpreted broadly and should not be construed in a restrictive sense. In this specification, the expression "including" does not exclude the presence or addition of one or more other components in addition to the mentioned configuration.

In this specification, singular expressions include plural unless the context expressly excludes them.

Each of the exemplary examples described herein can be combined with each other, and unless contradicted, what is described in a particular example may be equally applicable to other examples, even if not described in the other examples.

### [Reference Numerals]

1: Electrode tab support
100: Body portion
201: First tab receptacle
202: Second tab receptacle
301: First electrode
301a: First electrode tab
302: Electrolyte layer
303: Second electrode
303a: Second electrode tab
W: Width of the tab receptacle
L: Length of the tab receptacle
H_{b}: Height of the body portion

## Claims

1. An electrode tab support, comprising a body portion; and
a tab receptacle formed in the body portion and configured to receive an electrode tab, wherein the tab receptacle includes a first tab receptacle and a second tab receptacle, wherein the first tab receptacle is disposed on a first side of the body portion,
wherein the second tab receptacle is disposed on a second side of the body portion,
wherein the first tab receptacle and the second tab receptacle are spaced apart from each other at a predetermined distance in the thickness direction of the body portion, and staggered from each other and not in line with each other in the length direction of the body portion.

2. The electrode tab support according to claim 1,
wherein the first tab receptacle and the second tab receptacle are spaced apart in the thickness direction of the body portion and disposed alternately with each other.

3. The electrode tab support according to claim 1,
wherein the first tab receptacle and the second tab receptacle are spaced apart from a third side of the body portion in the thickness direction of the body portion.

4. The electrode tab support according to claim 1,
wherein the distance (d) spaced apart in the thickness direction of the body portion of the first tap receptacle and the second tap receptacle is the same as the laminated thickness of the electrode and electrolyte layer.

5. The electrode tab support according to claim 1,
wherein the first tab receptacle receives a first electrode tab,
wherein the second tab receptacle receives a second electrode tab.

6. The electrode tab support according to claim 1,
wherein the tab receptacle provides having three sides abutting the body portion.

7. The electrode tab support according to claim 1,
wherein the width (W) of the tab receptacle is equal to the thickness of the electrode tab.

8. The electrode tab support according to claim 1,
wherein the length (L) of the tab receptacle is equal to the width of the electrode tab.

9. The electrode tab support according to claim 1,
wherein the height of the tab receptacle is equal to the height (H_{b}) of the body portion.

10. The electrode tab support according to claim 1,
wherein the first tab receptacle may comprise a plurality of first tab receptacles,
wherein the plurality of first tap receptacles may be further included as many as the number (n) of the first electrodes.

11. The electrode tab support according to claim 1,
wherein the second tab receptacle may comprise a plurality of second tab receptacles,
wherein the plurality of second tap receptacles may be further included as many as the number (m) of the second electrodes.

12. The electrode tab support according to claim 1,
wherein the first and second sides of the body portion are sides facing each other in the same direction as the thickness direction of the body portion.

13. The electrode tab support according to claim 1,
wherein the height (H_{b}) of the body portion is less than or equal to the height (Ht) of the electrode tab.

14. The electrode tab support according to claim 1,
wherein 50% of compression force deflection (CFD) of the body portion is 3000 kPa to 4000 kPa.

15. The electrode tab support according to claim 1,
wherein the electrode tab support is for an all-solid-state battery.
